# EUROPÄISCHE PATENTSCHRIFT

(11) **EP 0 784 177 B1**
(45) Veröffentlichungstag und Bekanntmachung des Hinweises auf die Patenterteilung: **02.06.1999**
(21) Anmeldenummer: 96117482.8
(22) Anmeldetag: 31.10.1996
(51) Int. Cl.: F16L 3/123, F16L 3/237, F16L 47/00, B29C 45/14

(54) **Bauelement**
Constructional element
Elément de construction

(30) Priorität: 15.01.1996 DE 29600556 U
(43) Veröffentlichungstag der Anmeldung: 16.07.1997
(73) Patentinhaber: Cohnen Beteiligungs-GmbH & Co. KG, D-35683 Dillenburg (DE)
(72) Erfinder: Brückmann, Klaus, 56472 Stockhausen-Illfurth (DE)
(74) Vertreter: Missling, Arne, Dipl.-Ing.

(56) Entgegenhaltungen:
- EP-A- 0 617 217
- US-A- 5 072 902

## Beschreibung

Die Erfindung betrifft ein Bauelement in Form eines Verbund-Bauteiles gemäß dem Oberbegriff von Anspruch 1.

An Kraftfahrzeugen werden fest installierte metallene Rohrleitungen für Betriebsfluide benötigt, beispielsweise für Bremsleitungen und, wie bei Wärmetauschern, auch in Form von Rohrregistern. Derartige frei verlegte Rohrleitungen müssen einerseits an der Karosserie oder anderen Fahrzeugteilen so angebracht sein, daß sich ihre Befestigung auch bei hoher dynamischer Beanspruchung über einen langen Zeitraum nicht lockert oder sogar löst, andererseits muß aber auch dafür gesorgt werden, daß die unvermeidlichen Fahrzeug-Schwingungen die Rohrleitungen nicht über Gebühr dynamisch belasten. Es ist deshalb in der Regel unumgänglich, daß diese Rohrleitungen jeweils über ein zwischengelegtes Dämpfungselement von den zur Befestigung dienenden Rohrschellen überfangen werden und die Auswirkung der Fahrzeug-Schwingungen an den Rohrleitungen auf diese Weise gemildert wird. Die Rohrschellen werden zumeist aus einem Metallblech angefertigt und müssen ebenso wie die Rohrleitungen gegen Korrosion durch einen entsprechenden Überzug genügend geschützt sein.

Diese Art der Befestigung der Rohrleitungen an den dafür vorgesehenen Fahrzeugteilen hat erhebliche Nachteile. Die Rohrschellen müssen kräftig ausgebildet sein und sind deshalb relativ schwer. Sie müssen auf die Abmaße und die Form der Rohrleitung abgestimmt werden, so daß bereits bei ein und demselben Kraftfahrzeug verschieden bemessene und geformte Rohrschellen vorgesehen werden müssen. Bei der Anbringung der Rohrleitungen besteht die Gefahr, daß deren Form und Oberfläche durch die Rohrschellen beschädigt werden.

Die Rohrschellen müssen auf die Rohrleitungen quer zu deren Rohrachse aufgeschoben werden und entsprechend aufgebogen werden können und auf der Rohrleitung oder auf einem aus der Rohrleitung gebildeten Register an der vorgesehenen Stelle festklemmbar sein. Dazu werden die Schenkel der Rohrschelle zumeist miteinander vernietet, und erst danach kann die Rohrschelle an dem Befestigungsort (etwa einem Karosserieblech) fixiert, beispielsweise angeschraubt werden. Aussehen und Preis einer solchen Befestigung sind unbefriedigend.

In der EP-A-617217, wird eine Rohrschelle beschrieben, die auf der Leitung durch Spritzen hergestellt wird und mit Haltelasche zur Befestigung versehen ist. Ein solches Bauteil hat gegenüber der Verwendung getrennt hergestellter und getrennt bleibender, miteinander lösbar verbindbarer Bauteile Vorteile.

Zunächst ist gegenüber einer metallenen Formschelle eine Verminderung des Gewichtes allein durch die Verwendung eines Kunststoffes festzustellen, die dazu noch einhergeht mit einer Korrosionsfestigkeit eines solchen Bauteiles; eine sonst dafür erforderliche Oberflächenbeschichtung der Rohrschelle fällt weg. Eine durch Spritzgießen an der Rohrleitung ausgebildete Rohrschelle ist mit hoher Maßhaltigkeit und in vielen verschiedenen, die Verhältnisse "vor Ort" berücksichtigenden räumlichen Konfigurationen herstellbar. Um eine Verformung der Leitung durch die Erwärmung während des Spritzvorganges zu vermeiden, wird um die Leitung ein geschlitzter Ring gelegt, so daß dieser die Leitung von dem Spritzmaterial trennt. Eine vollständige Trennung der Leitung und des Spritzmaterials kann aufgrund des Schlitzes jedoch nicht erreicht werden. Die aufgespritzte Rohrschelle kann derart geformt sein, daß sie mehrere Rohre oder Rohrregister aufnimmt. Zwischen dem Ring und der Leitung besteht eine Reibschlußverbindung, die ein Verdrehen von der Leitung gegenüber dem Ring zuläßt. Ein wesentlicher Nachteil dieser Konstruktion ist die aufwendige Montage des Ringes, der erst aufgebogen werden muß, um anschließend auf der Leitung festgeklemmt zu werden.

Das in der US-A 5 072 902 , die den nächstkommenden Stand der Technik bildet, beschriebene Bauteil ist zur Bündelung von Rohren geeignet. Die Rohre müssen jedoch in geeigneter, dem Bauteil angepaßter Weise geformt sein. Durch diese spezielle Formung von Rohren und Bauteil wird ein Formschluß erreicht und Rohre und Bauteil sind somit gegen gegenseitiges Verschieben und Verdrehen gesichert.

Nachteil ist jedoch, daß durch die spezielle Formung der Rohre die Verbindung zwischen den Rohren nicht an jeder Stelle erfolgen kann, eine Querschnittverengung der Leitung erfolgt und keine Haltelasche zur Befestigung des Bauteils vorgesehen ist.

Die Erfindung hat sich deshalb die Aufgabe gestellt, die geschilderten Mängel abzustellen und ein Bauelement der eingangs genannten Art so auszubilden, daß die Rohrleitung und die Rohrschelle bequem, drehfest und sicher miteinander verbindbar sind.

Erfindungsgemäß wird die Aufgabe durch, die Merkmale des Anspruchs 1 gelöst.

Ein ganz wesentlicher Vorteil der integrierten Ausbildung des Bauelementes ist es, daß eine haltbare Verbindung zwischen der Ummantelung der Rohrleitung, die nicht in besonderer Weise geformt sein muß, und der Rohrschelle ohne Deformierung der Rohrleitung und ohne Beschädigung von deren Oberfläche erfolgt, so daß weder eine Einschnürung des Rohrquerschnittes erforderlich und zu befürchten noch mit einer Korrosion an der Mantelfläche der Rohrleitung zu rechnen ist. Gleichwohl ist die Verbindung aber außerordentlich stabil, so daß die Rohrschelle an der Rohrleitung ortsunveränderlich fixiert ist.

Die erfindungsgemäße Anordnung ist per se schwingungsdämpfend, so daß ein spezielles Dämpfungselement nicht erforderlich ist; auch dies trägt zur Senkung der Kosten bei.

Ein auf diese Weise rationell und kostensparend herstellbares Bauelement kann dabei aber auch mit einer ästhetisch durchaus befriedigenden Außenkontur versehen werden, so daß das erfindungsgemäße Bauelement eine gute Formgestaltung mit einer hohen Wirtschaftlichkeit verbindet.

Die Rohrschelle ist auf der Rohrleitung beliebig lokalisierbar und kann dabei sowohl an einem geraden als auch an einem gebogenen Teilstück der Rohrleitung vorgesehen werden.

Es ist zweckmäßig, wenn die Ummantelung der Rohrleitung aus einem Kunststoff besteht, am besten aus dem gleichen Kunststoff wie die Rohrschelle, vorzugsweise aus einem Polyamid.

Deren Festigkeit und Formstabilität kommt es zugute, wenn der verwendete Kunststoff glasfaser-verstärkt ist.

Bei dem erfindungsgemäßen Bauelement kann es sich um ein Verbund-Bauteil eines einzelnen Stranges einer Rohrleitung mit einer oder mehreren Rohrschellen handeln; statt dessen kann aber die Rohrleitung auch als Rohr-Register aus mindestens zwei benachbarten Teilstücken der Rohrleitung ausgebildet und die Teilstücke können von mindestens einer gemeinsamen Rohrschelle gehaltert sein, die für jedes Teilstück ein gesondertes Haltestück aufweist, wobei die Haltestücke jeweils an einer mit ihnen einstückigen Verbindungslasche angeschlossen sind.

An der Rohrschelle befindet sich mit dieser einstückig, eine Haltelasche zur Befestigung des Bauelementes, beispielsweise an einer Karosserie.

Insgesamt werden durch die Erfindung die Nachteile des Standes der Technik entsprechend der vorgegebenen Aufgabenstellung beseitigt und die Lebensdauer und Funktionstüchtigkeit eines solchen Bauelementes verbessert, so daß dieses sehr wirtschaftlich hergestellt und montiert werden kann.

Die Erfindung wird nachstehend an Hand der Zeichnung an einem Ausführungsbeispiel näher erläutert. Es zeigen
- Fig.1: einen Querschnitt durch ein erfindungsgemäßes Bauelement und
- Fig.2: eine Draufsicht auf das Bauelement entsprechend Fig.1,
jeweils teilweise geschnitten und in schematischer, vereinfachter Darstellung.

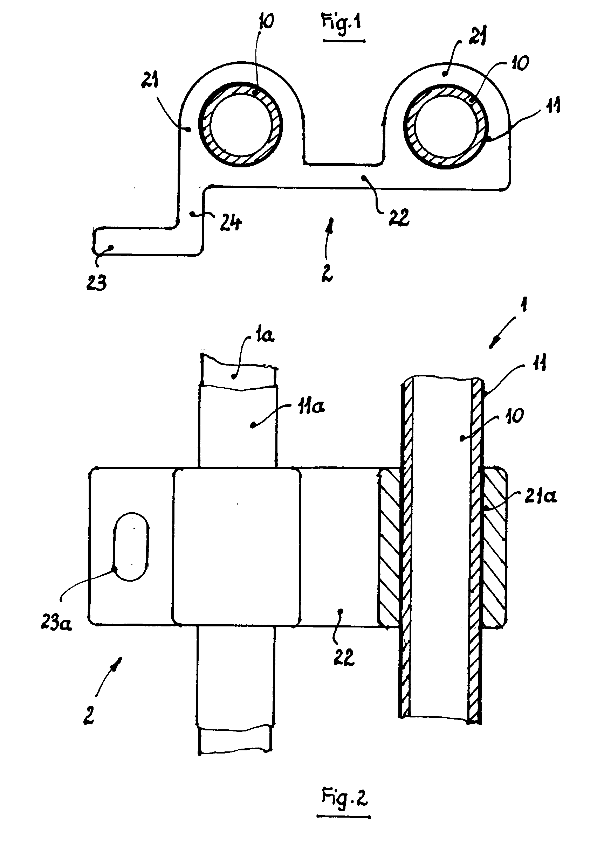

Ein Bauelement gemäß der Erfindung besteht aus einer Rohrleitung 1 und einer Rohrschelle 2. Im Ausführungsbeispiel der Fig.1,2 ist die Rohrleitung 1 als Rohr-Register ausgebildet, das aus zwei parallelen Teilstücken 10 besteht und beispielsweise als Wärmetauscher in einem Kraftfahrzeug dient und mittels der beiden Teilstücken 10 gemeinsamen Rohrschelle 2 an der Karosserie befestigt ist. Die Rohrleitung 1 ist mit einer Ummantelung 11 aus einem Polyamid versehen.

Die Rohrschelle 2 besteht ebenfalls aus einem Polyamid und einstückig aus zwei Haltestücken 21, einer Verbindungslasche 22 und einer Haltelasche 23; sie wird gleichzeitig mit ihrer konfigurativen Ausbildung auf das Rohr-Register der Rohrleitung 1 aufgespritzt. Dabei kann auch ein kohäsiver Stoffschluß zwischen der Mantelfläche lla der Ummantelung 11 und der inneren Laibung 21a der Haltestücke 21 entstehen, andererseits bilden die Haltestücke 21 mit den Teilstücken 10 einen Formschluß aus. Die Haltestücke 21 sind axial auf den Teilstücken 10 fixiert und können nicht längsverschoben werden; die Haltekräfte werden durch den Formschluß übertragen, der auch den Abstand der Teilstücke 10 voneinander durch die mit den Haltestücken 21 einstückige Verbindungslasche 22 unverrückbar festlegt.

Die Haltelasche 23, durch eine Kröpfung 24 etwas versetzt, im übrigen aber zu der Verbindungslasche 22 flächenparallel ausgebildet, weist ein Langloch 23a zur Befestigung der Rohrschelle 2, beispielsweise mit einer Schraubverbindung, an einem Karosserieblech auf.

### Aufstellung der Bezugszeichen

- 1: Rohrleitung
- 1a: Mantelfläche
- 10: Teilstück
- 11: Ummantelung
- 11a: Mantelfläche
- 2: Rohrschelle
- 21: Haltestück
- 21a: Laibung
- 22: Verbindungslasche
- 23: Haltelasche
- 23a: Langloch
- 24: Kröpfung

## Patentansprüche

1. Bauelement in Form eines Verbund-Bauteiles, bestehend aus mindestens einer Rohrleitung (1) aus Metall und einer Rohrschelle (2) mit der einstückig eine Haltelasche (23) verbunden ist, wobei die aus Kunststoff bestehende Rohrschelle (2) mittels Spritzguß auf die Rohrleitung (1) aufgebracht ist,
dadurch gekennzeichnet,
daß die Rohrleitung (1) in einem von der Rohrschelle (2) kontaktierten Bereich mit einer adhäsiv an der Rohrleitung angebrachten Ummantelung (11) versehen ist, daß die Ummantelung (11) einen adhäsiven oder kohäsiven Stoffschluß mit einem einstückig an der Rohrschelle (2) verbundenen Haltestück (21) eingeht, so daß eine ortsunveränderliche durch Formschluß Fixierung der Rohrschelle (2) auf der Rohrleitung (1) erreicht wird.

2. Bauelement nach Anspruch 1, dadurch gekennzeichnet, daß die Ummantelung (11) und die Rohrschelle (2) aus dem gleichen Kunststoff bestehen, vorzugsweise aus einem Polyamid.

3. Bauelement nach einem der Ansprüche 1 oder 2, dadurch gekennzeichnet, daß die Rohrschelle (2) aus einem glasfaser-verstärktem Kunststoff besteht.

4. Bauelement nach einem der Ansprüche 1 bis 3, dadurch gekennzeichnet, daß die Rohrleitung (1) aus Aluminium besteht.

5. Bauelement nach einem der Ansprüche 1 bis 4, dadurch gekennzeichnet, daß die Rohrleitung (1) als Rohrregister aus mindestens zwei benachbarten Teilstücken (10) der Rohrleitung (1) ausgebildet ist und die Teilstücke (10) von mindestens einer gemeinsamen Rohrschelle (2) gehaltert sind, die für jedes Teilstück (10) ein gesondertes Haltestück (21) aufweist, wobei die Haltestücke (21) jeweils an einer mit ihnen einstückigen Verbindungslasche (22) angeschlossen sind.

## Claims

1. A component part in the form of a composite part, consisting of at least one pipe line (1) of metal and a pipe clip (2) which is connected in one piece to a holding tongue (23), the pipe clip (2) composed of plastics material being applied to the pipe line (1) by means of injection moulding, characterised in that in a region with which the pipe clip (2) makes contact, the pipe line (1) is provided with a casing (11) adhesively fastened to the pipe line, in that the casing (11) enters into an adhesive or cohesive material connection with a holding piece (21) connected in one piece to the pipe clip (2), so that the pipe clip (2) is secured on the pipe line (1) in an immovable positive-locking manner.

2. A component part in accordance with Claim 1, characterised in that the casing (11) and the pipe clip (2) are composed of the same plastics material, preferably of a polyamide.

3. A component part in accordance with either one of Claims 1 and 2, characterised in that the pipe clip (2) is composed of a glass-fibre-reinforced plastics material.

4. A component part in accordance with any one of Claims 1 to 3, characterised in that the pipe line (1) is composed of aluminium.

5. A component part in accordance with any one of Claims 1 to 4, characterised in that the pipe line (1) is in the form of a pipe compound of at least two adjacent partial pieces (10) of the pipe line (1) and the partial pieces (10) are held in position by at least one common pipe clip (2) which has a separate holding piece (21) for each partial piece (10), the holding pieces (21) each being joined to a connecting link (22) in one piece therewith.

## Revendications

1. Module présenté sous la forme d'une pièce détachée, composé d'au moins une conduite tubulaire (1) en métal et d'un collier de tube (2), auquel une patte de fixation (23) est assemblée en une seule pièce, le collier de tube (2) en matière plastique étant mis en place sur la conduite tubulaire (1) par moulage par injection, caractérisé
en ce que la conduite tubulaire (1) est munie, dans une région qui est en contact avec le collier de tube (2), d'un enrobage (11) fixé à la conduite tubulaire par une liaison adhésive, en ce que l'enrobage (11) établit une liaison par matière, adhésive ou cohésive, avec une pièce de fixation (21) assemblée au collier de tube (2) en une seule pièce, de sorte qu'on obtient un blocage du collier de tube (2) sur la conduite tubulaire (1) qui est immobile et agit par complémentarité de forme.

2. Module selon la revendication 1, caractérisé en ce que l'enrobage (11) et le collier de tube (2) sont faits de la même matière plastique, qui est de préférence une polyamide.

3. Module selon l'une des revendications 1 ou 2, caractérisé en ce que le collier de tube (2) est fait d'une matière plastique renforcée de fibres.

4. Module selon l'une des revendications 1 à 3, caractérisé en ce que la conduite tubulaire (1) est en aluminium.

5. Module selon l'une quelconque des revendications 1 à 4, caractérisé en ce que la conduite tubulaire (1) est constituée par un faisceau tubulaire composé d'au moins deux segments partiels (10) de la conduite tubulaire (1) adjacents entre eux et en ce que les segments partiels (10) sont maintenus par au moins un collier de tube commun (2), qui présente une pièce de fixation séparée (21) pour chaque segment partiel (10), les pièces de fixation (21) étant raccordées chacune à une patte d'assemblage (22) formée d'une seule pièce avec elles.
